# EUROPEAN PATENT APPLICATION

(11) **EP 3 018 568 A1**
(43) Date of publication of application: **11.05.2016**
(21) Application number: 14819346.9
(22) Date of filing: 28.05.2014
(51) Int. Cl.: G06F 3/0481, G06F 3/0488

(54) **INFORMATION PROCESSING DEVICE**

(30) Priority: 05.07.2013 JP 2013141304
(71) Applicant: Clarion Co., Ltd., Saitama-shi, Saitama 330-0081 (JP)
(72) Inventor: TAKADA, Shintaro, Tokyo 100-8280 (JP); MATSUBARA, Takashi, Tokyo 100-8280 (JP); MORI, Naoki, Tokyo 100-8280 (JP)
(74) Representative: MERH-IP Matias Erny Reichl Hoffmann Patentanwälte PartG mbB
(86) International application number: PCT/JP2014/064099
(87) International publication number: WO 2015/001875

(57) **Abstract**

An information processing device configured from: a vehicle-mounted device control unit that controls the overall operation of a vehicle-mounted device; a sensing unit capable of measuring the distance to an object and capable of detecting gestures; and a display unit that displays video/images. The sensing unit continuously monitors to determine the distance at which objects are located in front of the display unit, and when the intrusion of the driver's hand into a prescribed region (1) in front of the display unit is detected, the sensing unit moves a prescribed icon (displayed on the display unit) toward the driver. Furthermore, when a speaker is provided, a sound effect or a sound is output from the speaker in conjunction with the movement of the icon. When the intrusion of the driver's hand into a region (2), which is closer to the display unit than the region (1), is detected, a lower-level menu associated with the icon is displayed in a fan-like manner, and a sound effect is output from the speaker. Furthermore, the menu is operated so as to be displayed for a fixed period of time, and in this state the menu continues to be displayed until the fixed period of time elapses, or until the driver performs a gesture such as a body movement, or until an input is received by a switch input unit.

## Description

### INCORPORATION BY REFERENCE

The present application claims priority from Japanese patent application JP2013-141304 filed on July 5, 2013 the content of which is hereby incorporated by reference into this application.

### TECHNICAL FIELD

The present invention relates to an information processing device.

### BACKGROUND ART

JP-A-2011-170598 (Patent Literature 1) describes a touch panel input device that is expected to allow the user to easily perform an operation on a touch panel by switching the touch panel layout between the layout for an operation with the left hand fingers and the layout for an operation with the right hand fingers.

### CITATION LIST

### PATENT LITERATURE

PATENT LITERATURE 1: JP-A-2011-170598

### SUMMARY OF INVENTION

### TECHNICAL PROBLEM

However, the technology described above and conventional technologies require the user to extend his or her hand to touch a button displayed on the screen. In addition, the user must keep his or her eyes on an operation target because the user touches the panel while carefully watching the buttons displayed on the screen. In addition, the display of a hierarchical menu requires the user to touch the panel many times, increasing the number of operations and the operation time. When an operation is performed using a gesture, the user must perform a defined operation and memorize the operation.

It is an object of the present invention to provide an information processing device that allows the user to perform a desired operation with a minimum number of operations without having to largely extend his or her hand and without having to keep his or her eyes on the screen for a long time.

### SOLUTION TO PROBLEM

A vehicle-mounted device, which is an example of an information processing device of the present invention, is a vehicle-mounted device that reduces driver's distraction (distraction: state of being distracted from driving by an operation other than the driving operation) for performing a desired operation. The vehicle-mounted device includes a vehicle-mounted device control unit that controls the operation of the vehicle-mounted device in its entirety, a sensing unit that can measure the distance to an object and detect a gesture, a touch input unit through which touch input is possible, a display unit that displays a video/image, and a speaker that outputs sound.

The sensing unit monitors the distance to an object before the display unit. When it is detected that the driver's hand enters region 1 that is a specific region before the display unit, the vehicle-mounted device control unit moves a particular button and icon, displayed on the display unit, to the driver's side and, at the same time, performs control to output a sound effect from the speaker. When the sensing unit detects that the driver's hand enters region 2 that is nearer to the display unit than region 1, the vehicle-mounted device control unit expands and displays the lower-level menu of the icon and performs control to output a sound effect from the speaker. After that, the vehicle-mounted device control unit performs control to display the displayed menu for a predetermined time. The menu is kept displayed until a predetermined time elapses after this state is generated, until the driver performs a gesture such as a hand movement, or until the displayed menu is touched.

### ADVANTAGEOUS EFFECTS OF INVENTION

According to the present invention, the user can perform a desired operation with a minimum number of operations without having to largely extend his or her hand and without having to keep his or her eyes on the screen for a long time.

Other objects, features and advantages of the present invention will become apparent from the following detailed description of the present invention taken together with the accompanying drawings.

### BRIEF DESCRIPTION OF DRAWINGS

[FIG. 1] FIG. 1 is a diagram showing the configuration of a vehicle-mounted device in a first embodiment of the present invention.
[FIG. 2] FIG. 2 is a diagram showing an example of the installation of a sensing unit in the first embodiment of the present invention.
[FIG. 3] FIG. 3 is a diagram showing the operation flow of a vehicle-mounted device in the first embodiment of the present invention.
[FIG. 4] FIG. 4 is a diagram showing the display content of a display unit 112 and the detection region of a user's hand.
[FIG. 5] FIG. 5 is a diagram showing the display content of the display unit 112 and the detection region of a user's hand.
[FIG. 6] FIG. 6 is a diagram showing the display content of the display unit 112 and the detection region of a user's hand.
[FIG. 7] FIG. 7 is a diagram showing the display content of the display unit 112 and the detection region of a user's hand.
[FIG. 8] FIG. 8 is a diagram showing the display content of the display unit 112.
[FIG. 9] FIG. 9 is a diagram showing the display content of the display unit 112.
[FIG. 10] FIG. 10 is a diagram showing the operation flow of a vehicle-mounted device in a second embodiment of the present invention.
[FIG. 11] FIG. 11 is a diagram showing the display content of a display unit 112 and the detection region of a user's hand.
[FIG. 12] FIG. 12 is a diagram showing an example of the installation of a sensing unit in a third embodiment of the present invention.
[FIG. 13] FIG. 13 is a diagram showing the operation flow of a vehicle-mounted device in a third embodiment of the present invention.
[FIG. 14] FIG. 14 is a diagram showing the display content of a display unit 112 and the detection region of a user's hand.
[FIG. 15] FIG. 15 is a diagram showing the display content of the display unit 112 and the detection region of a user's hand.
[FIG. 16] FIG. 16 is a diagram showing the detection region of a user's hand.

### DESCRIPTION OF EMBODIMENTS

Embodiments of the present invention are described in detail below with reference to the drawings.

### 1. FIRST EMBODIMENT

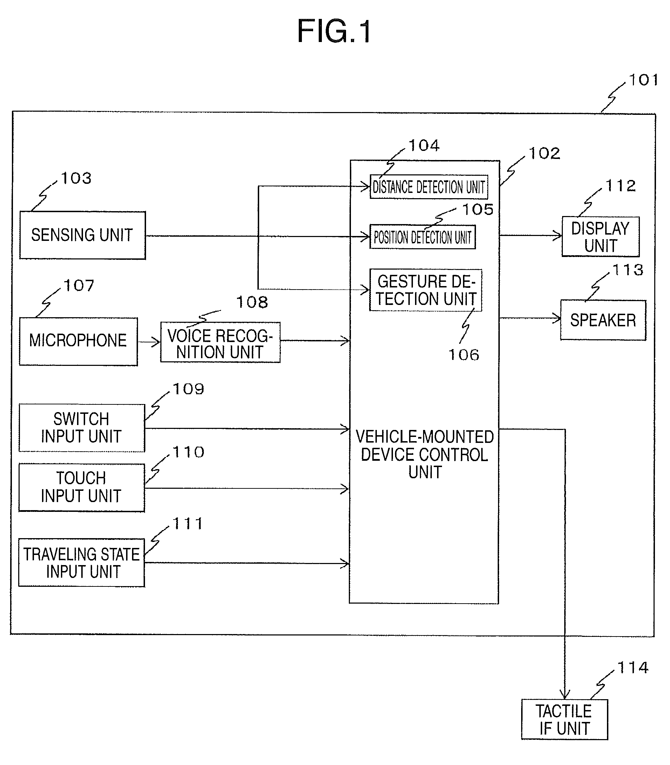

FIG. 1 is a block diagram showing a vehicle-mounted device 101 in this embodiment. It is supposed that the vehicle-mounted device 101 in this embodiment is mounted on a vehicle in which the steering wheel is provided in the right side toward the traveling direction.

A vehicle-mounted device control unit 102, which is a part configured by a CPU and the software executed by the CPU for controlling the whole operation of the vehicle-mounted device 101, includes a distance detection unit 104, a position detection unit 105, and a gesture detection unit 106. More specifically, the vehicle-mounted device control unit 102 controls the basic operation of a car navigation system and, based on the various types of input information, controls the output content.

The distance detection unit 104 calculates the distance from a sensing unit 103, which will be des cribbed later, to a user's hand based on the voltage output from the sensing unit 103. The position detection unit 105 identifies where the user's hand is positioned based on the voltage output from the sensing unit 103. In addition, the gesture detection unit 106 determines whether the user performs a predetermined operation (hereinafter called a "gesture"), based on the voltage output from the sensing unit 103.

The sensing unit 103 is configured by an infrared-light distance sensor that includes a projector that emits an infrared light and an optical receiver that receives an infrared light reflected by an object at a short distance (for example, within 5 cm). The sensing unit 103 outputs the voltage, corresponding to the quantity of light received by the optical receiver, to the vehicle-mounted device control unit 102.

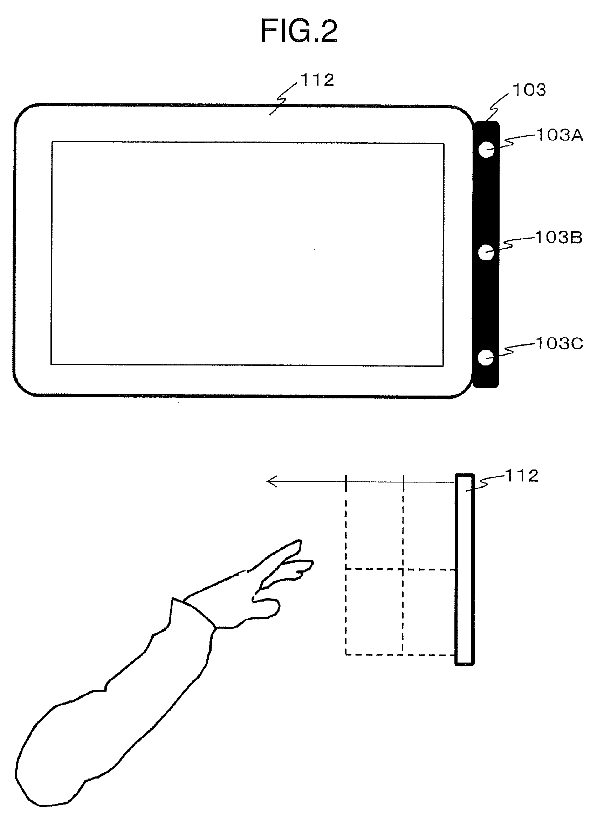

FIG. 2 shows a specific example of a display unit 112 that includes the sensing unit 103. The sensing unit 103 includes a plurality of infrared light distance sensors 103A - 103C. The infrared light sensors 103A - 103C are vertically arranged at the right end of the display unit 112. Each of the infrared light sensors 103A - 103C independently outputs the voltage, corresponding to the quantity of light received by the light receiver, to the vehicle-mounted device control unit 102. While the user, the driver, extends his or her hand before the display unit 112, the user's hand and arm are present before the sensing unit 103.

At this time, by identifying which of the infrared light sensors 103A - 103C detects the user's hand, the vehicle-mounted device control unit 102 can detect in which part of the display unit 112 (upper part, middle part, or lower part) the user's hand is present. The vehicle-mounted device control unit 102 can also know the distance, for example, between the user's finger and the sensing unit 103, according to the level of the voltage output by the sensing unit 103.

In this embodiment, the space before the display unit 112, which is from the sensing unit 103 to a first distance (for example, 5 cm), is defined as region 1, the space before the display unit 112, which is from the sensing unit 103 to a second distance (for example, 2.5 cm) and which corresponds to the upper half of the display unit 112, is defined as region 2, and the space before the display unit 112, which is from the sensing unit 103 to a second distance (for example, 2.5 cm) and which corresponds to the lower half of the display unit 112, is defined as region 3, as shown in FIG. 2.

The vehicle-mounted device control unit 102 stores a data table that defines the relation among each of these distances, the voltage value output from the sensing unit 103, and the type of the infrared light distance sensor that detects the user's hand. Based on this data table and the voltage actually output from the sensing unit 103, the vehicle-mounted device control unit 102 identifies in which region, region 1 to region 3, the user's hand is present.

The number of infrared light distance sensors configuring the sensing unit 103 and their mounting positions are not limited to those in this embodiment. In the example shown in FIG. 2, the sensing unit 103 is mounted on the right side of the display unit 112 because the driver's hand comes from the right side in the case of a right-hand drive vehicle. In the case of a left-hand drive vehicle, the sensing unit 103 may be mounted on the left side of the display unit 112 because the driver's hand comes from the left side. When applied to a personal computer or a digital signage display, the sensing unit 103 may be mounted on the dominant hand side. The number of regions identified by the vehicle-mounted device control unit 102 using the sensing unit 103 is not limited to the number of regions identified in this embodiment.

The component configuring the sensing unit 103 is not limited to an infrared light distance sensor. For example, any of sensors, such as a laser distance sensor, an ultrasonic distance sensor, a distance image sensor, an electric field sensor, or an image sensor, as well as a microcomputer that performs data processing or software that operates on a microcomputer, may also be used to configure the sensing unit 103.

Returning to FIG. 1 again, a voice recognition unit 108 recognizes voices based on voice data obtained from a microphone 107 and converts the received voices to a signal that indicates text information or an operation on the vehicle-mounted device 101.

A switch input unit 109 sends the information, which indicates whether a switch provided on the vehicle-mounted device 101 is pressed, to the vehicle-mounted device control unit 102.

A touch input unit 110 sends the information on a touched coordinate to the vehicle-mounted device control unit 102.

A traveling state input unit 111, a part through which the information about the state of a vehicle on which the vehicle-mounted device 101 is mounted is input, sends the information about the vehicle speed, the state of the accelerator, and the state of various brakes to the vehicle-mounted device control unit 102.

The display unit 112, a device that presents video information to the user, includes a display unit such as a LCD (Liquid Crystal Display), an arithmetic processing unit necessary for the display processing for video content or the GUI (Graphical User Interface), and a memory. A touch panel, integrated with the touch input unit 110, is applied to the display unit 112 in this embodiment. A speaker 113 is means for externally outputting sound.

A tactile interface unit 114 is mounted on a device the user touches, for example, on a steering wheel or a vehicular seat. When an instruction is received from the vehicle-mounted device control unit 102, the tactile interface unit 114 sends the information to the user through the sense of touch by transmitting a vibration or by applying a weak electric current.

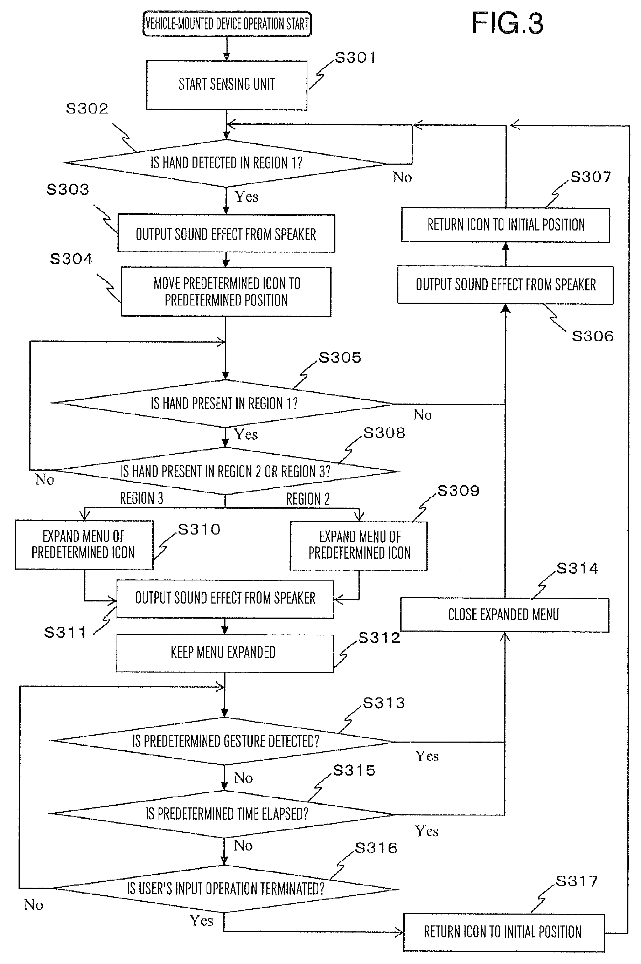

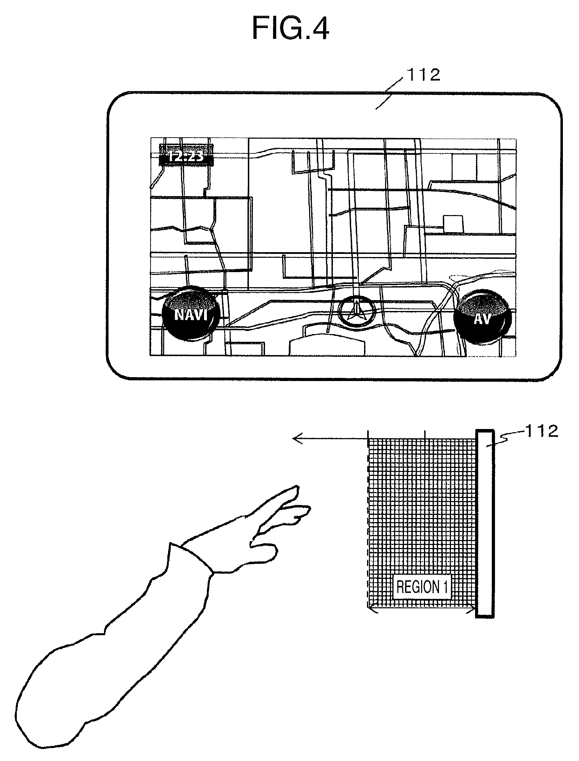

The operation of the vehicle-mounted device control unit 102 is described below with reference to the flowchart in FIG. 3. In this flowchart, when the engine of the vehicle is started, the operation of the vehicle-mounted device 101 is started. As shown in FIG. 4, the information on navigation such as the map and the time of day, as well as various types of icons, are displayed on the display unit 112. In this embodiment, the NAVI icon and the AV icon are displayed. In this embodiment, the item selection screens used by the user to select items are hierarchically structured and are stored in the vehicle-mounted device control unit 102.

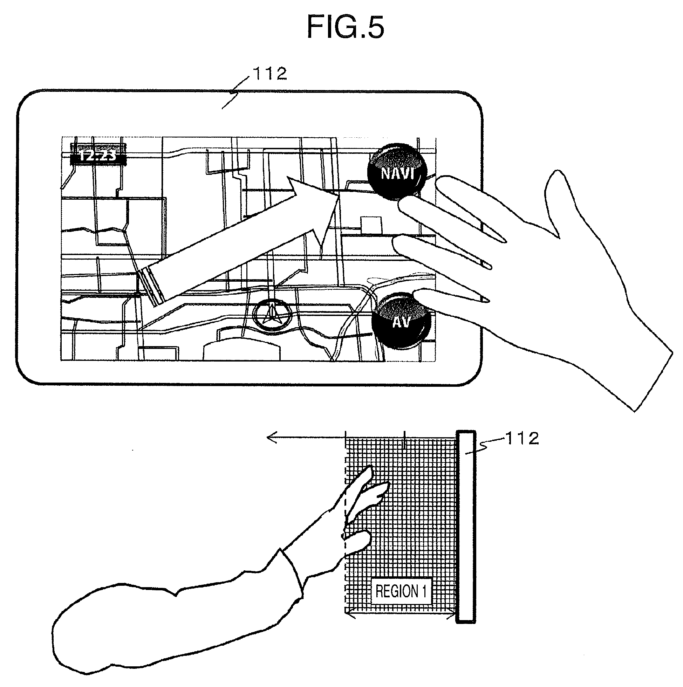

The vehicle-mounted device control unit 102 starts the sensing unit 103 (S301: "Start sensing unit"). The sensing unit 103 monitors whether the user's hand is detected in region 1 such as the one shown in FIG. 4. If the user's hand is detected in region 1 (S302: "Is hand detected in region 1?" Yes) as shown in FIG. 5, the vehicle-mounted device control unit 102 performs control for the speaker 113 to output a first sound effect or a voice (S303: "Output sound effect from speaker"). The sound effect mentioned here refers to the sound "pop" indicating that the hand enters region 1 or the sound "whiz" indicating that an object moves.

The vehicle-mounted device control unit 102 performs control for the display unit 112 to move a predetermined icon, displayed by the display unit 112, to the right side, that is, to the driver's side in such a way that the NAVI button shown in FIG. 5 is moved (S304: "Move predetermined icon to predetermined position"). In this example, the NAVI button is displayed with the characters "NAVI" within the graphic. Instead of displaying the characters in the graphic, it is also possible to display only the characters "NAVI" and, when the user's hand is detected in region 1, to move only the characters "NAVI" to the predetermined position. After that, if the sensing unit 103 does not detect the user's hand in region 1 anymore (S305: "Is user's hand present in region 1?" No), the vehicle-mounted device control unit 102 performs control for the speaker 113 to output a second sound effect or a voice (S306: "Output sound effect from speaker").

The sound effect used in this case is the sound "pop" indicating that the hand leaves the region or the sound "whiz" indicating that an object moves. After that, the vehicle-mounted device control unit 102 performs control for the display unit 112 to return the moved icon to the initial display position shown in FIG. 4 (S307: "Return icon to initial position").

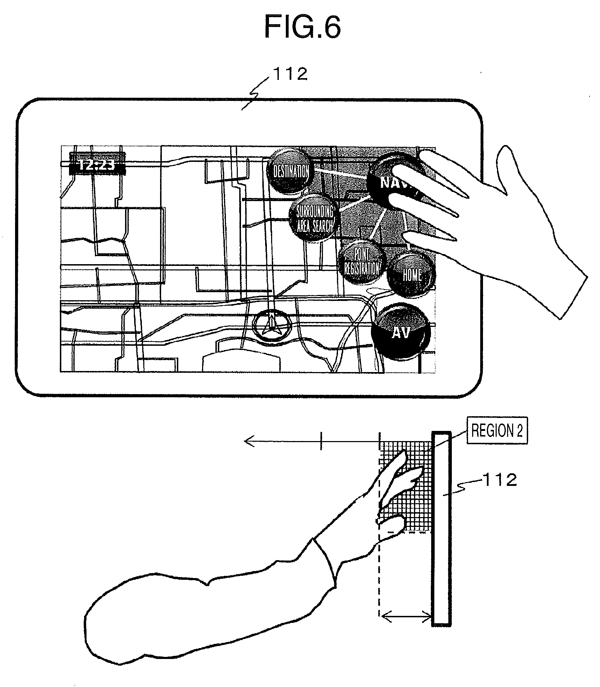

If the sensing unit 103 detects that the user's hand is present in region 1 (S305: "Is user's hand present in region 1?" Yes) and that the user's hand is present in region 2 in FIG. 6 (S308: "Is user's hand present in region 2 or region 3?" region 2), the vehicle-mounted device control unit 102 performs control for the display unit 112 to display the lower-level menu of the NAVI icon in a fan-like manner (S309: "Expand menu of predetermined icon") as shown in FIG. 6. In this embodiment, "Destination", "Surrounding area search", "Position registration", and "Home", which are lower-level menus of the NAVI icon, are displayed.

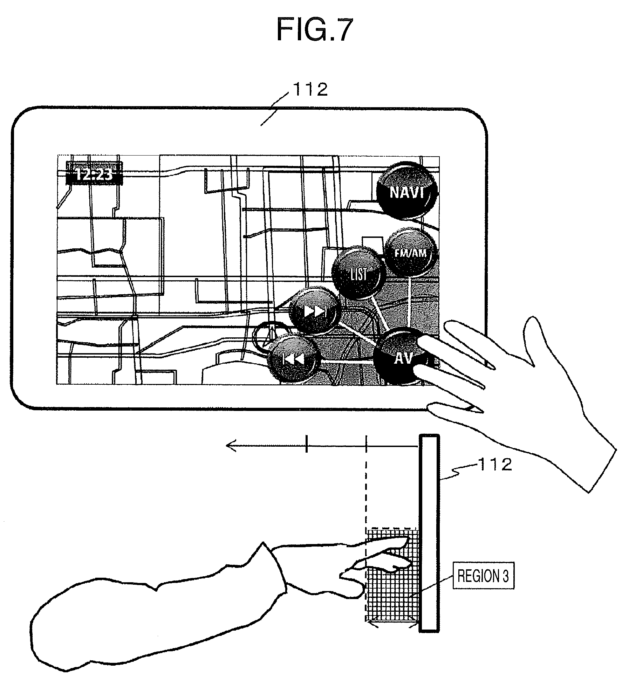

Similarly, if the sensing unit 103 detects that the user's hand is present in region 3 in FIG. 7 (S308: "Is user's hand present in region 2 or region 3?" region 3), the vehicle-mounted device control unit 102 performs control for the display unit 112 to display the lower-level menu of the AV icon in a fan-like manner (S310: "Expand menu of predetermined icon") as shown in FIG. 7. In this embodiment, "FM/AM", "List", "Forward", and "Reverse", which are lower-level menus of the AV icon, are displayed.

The vehicle-mounted device control unit 102 performs control for the speaker 113 to output a third sound effect or a voice according to the motion on the screen (S311: "Output sound effect from speaker"). As the sound effect, the "splashing sound" that sounds like the splashing of an object is output. The sound effect "tick" may also be used to let the user know the state in which the menu is displayed in a expanded manner.

After that, the vehicle-mounted device control unit 102 keeps displaying the menu in the fan-like, expanded manner for a predetermine length of time (S312: "Keep menu expanded"). If the gesture detection unit 106 detects a gesture, such as a user's bye-bye motion, before the sensing unit 103 (S313: "Is predetermined gesture detected?" Yes), the vehicle-mounted device control unit 102 stops the display of the fan-like, expanded menu (S314: "Close expanded menu") and the processing proceeds to the steps S306 and S307.

If the gesture detection unit 106 does not detect a user's gesture (S313: "Is predetermined gesture detected?" No) and a predetermined time, for example, ten seconds, is elapsed after the menu is displayed (S315: "Is predetermined time elapsed?" Yes), the vehicle-mounted device control unit 102 performs the processing in step S314. When a displayed menu is touched and the user input operation is accepted, the menu selected through the touch is displayed at the position, where the icon has been displayed, as an icon and the lower-level menu of the selected menu is displayed in a fan-like, expanded manner. For example, if "Destination" is selected through the touch, "Destination" is displayed at the position, where the NAVI icon has been displayed, as an icon and the lower-level menu of "Destination" is displayed in a fan-like, expanded manner. When the menu selection reaches the lowest layer and a desired item is selected (S316: "Is user's input operation terminated?" Yes), the vehicle-mounted device control unit 102 sets the icon to the highest level of the menu and returns the icon to the initial display position (S317: "Return icon to initial position") and performs the processing in step S302.

When a menu is displayed, the condition determination in S313, S315, and S316 is performed repeatedly. In the operation flow in FIG. 3, if the user's hand is once detected in region 2 or region 3 and the menu is displayed in the processing in S312 and, after that, if the hand is detected in another region, another configuration is also possible in which the menu corresponding to the region where the hand is newly detected is displayed (S309 or S310). This configuration allows the user to display a menu without touching the panel, thus reducing both the number of touch operations and the operation time.

Although it is determined in S313 whether a predetermined gesture is detected, another configuration is also possible in which the voice recognition unit 108 determines whether a predetermined speech is detected. The word "cancel", "home", or "return" may be used as the predetermined speech. This configuration allows the user to stop displaying the menu, displayed in the expanded, fan-like manner, without having to bring the hand before the sensing unit 103, reducing the possibility that the user is distracted from driving the vehicle. It is also possible to stop displaying the menu, displayed in an expanded manner, and to return the icon to the initial display position by pressing a button such as a hard switch button or a steering controller button.

The configuration in which a sound effect or a voice is output from the speaker 113 may be changed to the configuration in which the tactile interface unit 114 is started either instead of outputting a sound effect from the speaker 113 or at the same time the sound effect is output from the speaker 113. This configuration allows the information to be transmitted through the user's sense of touch even when the surrounding nose is so loud that the user cannot hear the sound from the speaker 113, making it possible to suitably send the status of the operation to user.

According to this embodiment, a predetermined icon is moved to the driver's side and is displayed on the display unit 112 simply by the driver bringing his or her hand before the display unit 112 as described above. Therefore, the driver can perform the touch operation for the lower-level menu of the icon without largely changing the driving posture.

In addition, the lower-level menu of a desired icon is displayed, not by touching the icon, but simply by bringing his or her hand near to the icon. Therefore, the effort, the number of times, or the length of time required for the touch operation can be reduced. This reduces the possibility that the touch operation distracts the driver from driving.

In addition, because the menu, once displayed, remains displayed for a predetermined time, the operation is restarted with the menu displayed even after the driver returns his or her hand to the steering wheel and then restarts the operation, with the result that the time for redisplaying the menu is reduced. The display of a menu can be stopped when a predetermined time elapses or when the user performs a simple operation such as a gesture or voice recognition and, therefore, the possibility that the user is distracted from driving is reduced.

When displaying a menu in S309 or S310, a configuration is possible in which the operable menus are limited based on the information received from the traveling state input unit 111. More specifically, the vehicle-mounted device control unit 102 determines the traveling state received from the traveling state input unit 111 and allows the driver to perform an operation on all menus when the vehicle is not in the traveling state and limits an operation on a part of the menus when the vehicle is in the traveling state.

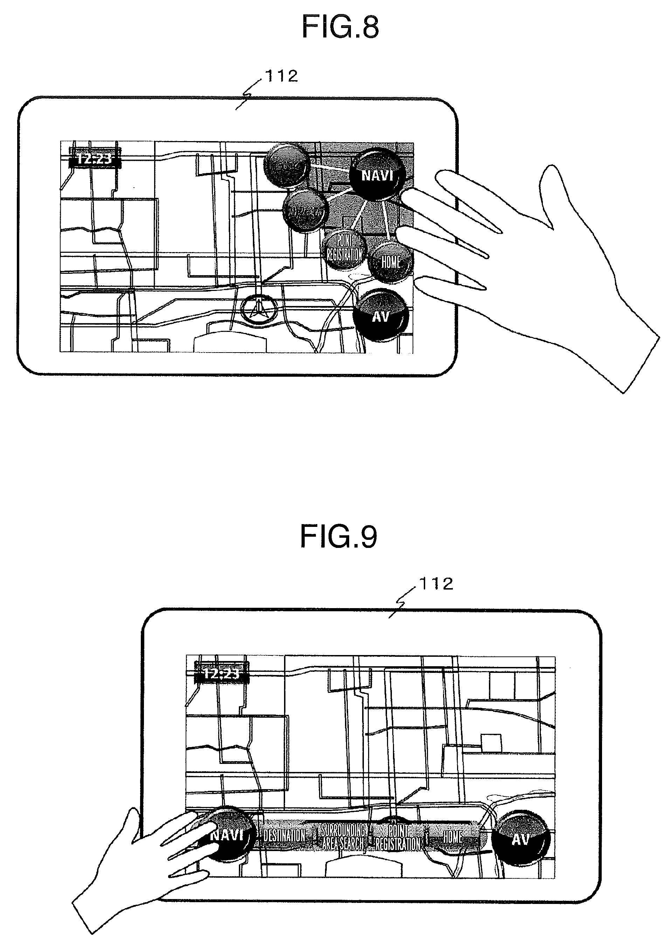

In this embodiment, the menus "Destination" and "Surrounding area search" are grayed out and unavailable for the touch operation during traveling as shown in FIG. 8. Graying out a part of the menus prevents the driver from performing a complicated operation during traveling, contributing to safe driving. When the driver touches an icon displayed at the initial display position while the hand is not yet detected in region 1, all menus become available for the operation as shown in FIG. 9 regardless of the traveling state. This ability allows a non-driver who does not drive the vehicle, for example, a person in the assistant driver's seat, to perform a complicated operation even during traveling.

When a fewer sensors are used in the sensor element arrangement in FIG. 2, for example, in a configuration in which only 103B is used, the vehicle-mounted device control unit 102 does not determine in which of the two regions the hand enters but determines, but determines whether the hand enters region 1 in FIG. 4, during the operation described in this embodiment. More specifically, when the hand is detected in region 1, the vehicle-mounted device control unit 102 moves an icon, far from the driver, to the driver's side and, when it is detected that the hand further approaches the sensor, displays the lower-layer menu of the icon in a fan-like, expanded manner. The subsequent operation is the same as that in the flowchart in FIG. 3.

### 2. SECOND EMBODIMENT

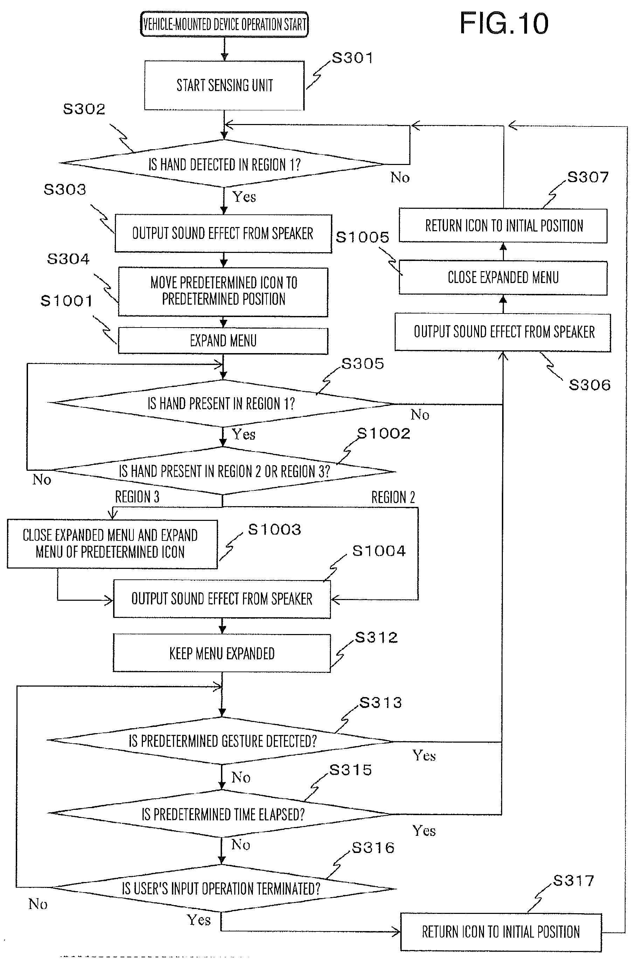

The configuration of a device in this embodiment is the same as that of the vehicle-mounted device 101 shown in FIG. 1. The operation of the vehicle-mounted device 101 in this embodiment is described in detail below with reference to the operation flow in FIG. 10. For a step in which the same operation as that in FIG. 3 is performed, the same serial number as that of the corresponding step in FIG. 3 is used in FIG. 10, and the detailed description will be omitted.

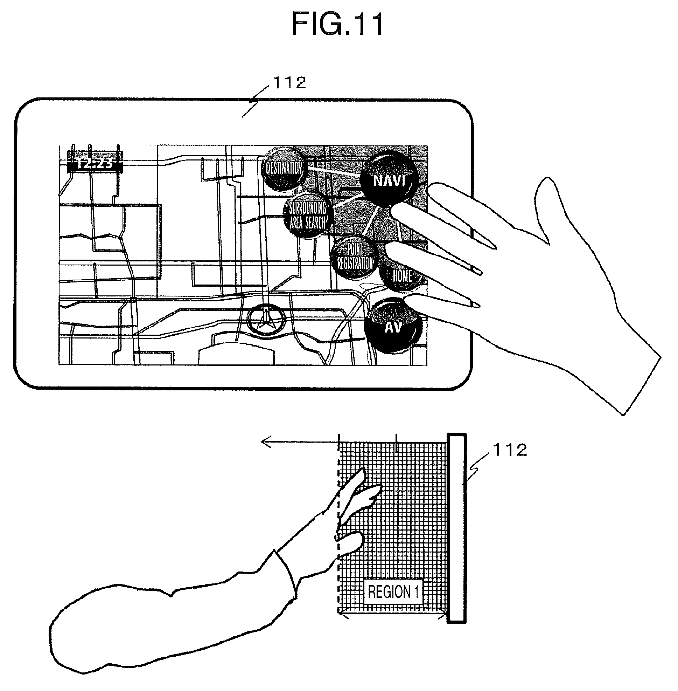

If the on-vehicle control unit 102 detects that the user's hand is present in region 1 based on the information received from the sensing unit 103, the on-vehicle control unit 102 performs control for the display unit 112 to move a predetermined icon (NAVI button) displayed on the display unit 112 (S302 to S304) and performs control to expand and display the lower-level menu of the moved icon on the display unit 112 as shown in FIG. 11 (S 1001: Expand menu").

After that, if it is detected that the user's hand is present in region 2, such as the one shown in FIG. 6, based on the information received from the sensing unit 103 (S1002: "Is hand present in region 2 or 3?" Region 2), the on-vehicle control unit 102 performs control to output a third sound effect from the speaker 113 (S1004: "Output sound effect from speaker").

On the other hand, if it is detected that the user's hand is present in region 3 such as the one shown in FIG. 7 (S1002: "Is hand present in region 2 or 3?" Region 3), the on-vehicle control unit 102 stops the display of the lower-level menu of the NAVI icon already displayed on the display unit 112 and controls to display the lower-level menu of another icon (AV icon) in a fan-like, expanded manner (S1003: "Close expanded menu and expand menu of predetermined icon").

After the processing of S306 is performed, the on-vehicle control unit 102 performs additional processing for performing control for the display unit 112 to stop the display of the lower-level menu of the NAVI icon or the AV icon (S1005 "Close expanded menu").

The lower-level menu displayed in S1001 may be not only that of the NAVI icon but also that of the AV icon. In addition, a configuration is also possible in which the user determines this display setting in advance. This configuration allows a user-tailored menu to be displayed, reducing the effort and the number of operations required to perform a desired operation.

The vehicle-mounted device 101 that performs the above operation enables the driver to move an icon, displayed on the display unit 112, to the driver's side, and the lower-level menu buttons of the displayed icon to be displayed, simply by extending the hand. Therefore, this vehicle-mounted device 101 allows the driver to operate the vehicle-mounted device without largely changing the driving posture and reduces the effort, the number of operation times, and the time, required for the touch operation, thus reducing the possibility that the user is distracted from driving the vehicle.

### 3. THIRD EMBODIMENT

The configuration of a device in this embodiment is the same as that of the vehicle-mounted device 101 shown in FIG. 1. The operation for the movement of the user's hand on the driver's side is similar to that in the embodiments described above. The operation for detecting the user's hand in the assistant driver's seat, which is the characteristic of this embodiment, is described below.

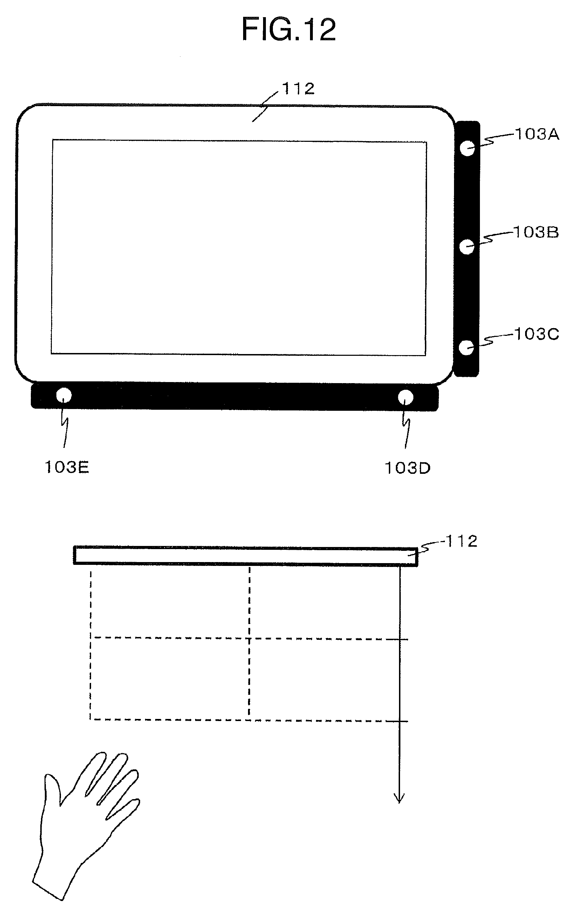

FIG. 12 is a diagram showing an example of the installation of a sensing unit 103 in this embodiment. The sensing unit 103 is vertically arranged on the driver's side of the display unit 112 in a right-hand drive vehicle with the sensor elements installed at three positions 103A, 103B, and 103C. In addition, two elements, 103D and 103E, are horizontally installed on the display unit 112. This configuration allows the hand on the driver's side to be detected as described in the first embodiment or the second embodiment and, at the same time, the position of, and the distance to, the user's hand on the assistant driver's seat side to be detected as shown in the bottom of FIG. 12.

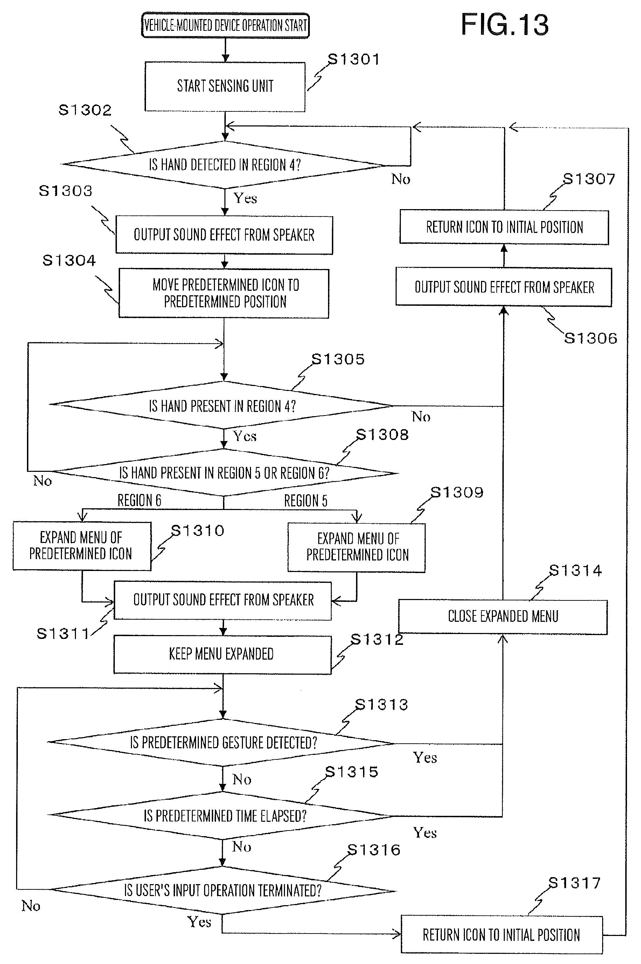

The operation of the vehicle-mounted device 101 in this embodiment is described in detail below with reference to the operation flow in FIG. 13.

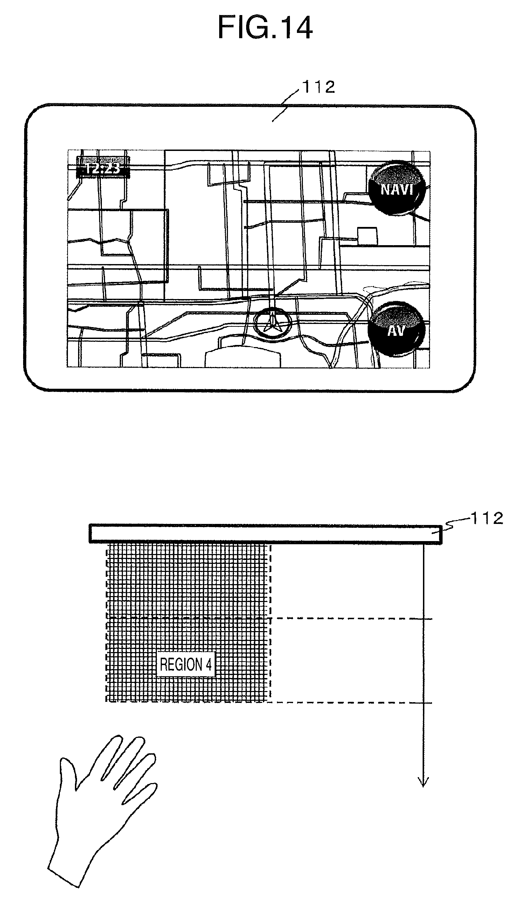

First, when the engine of the vehicle is started, the operation of the vehicle-mounted device 101 is started. As shown in FIG. 14, the vehicle-mounted device control unit performs control to display the information on navigation such as the map and the time of day, as well as various types of icons, on the display unit 112.

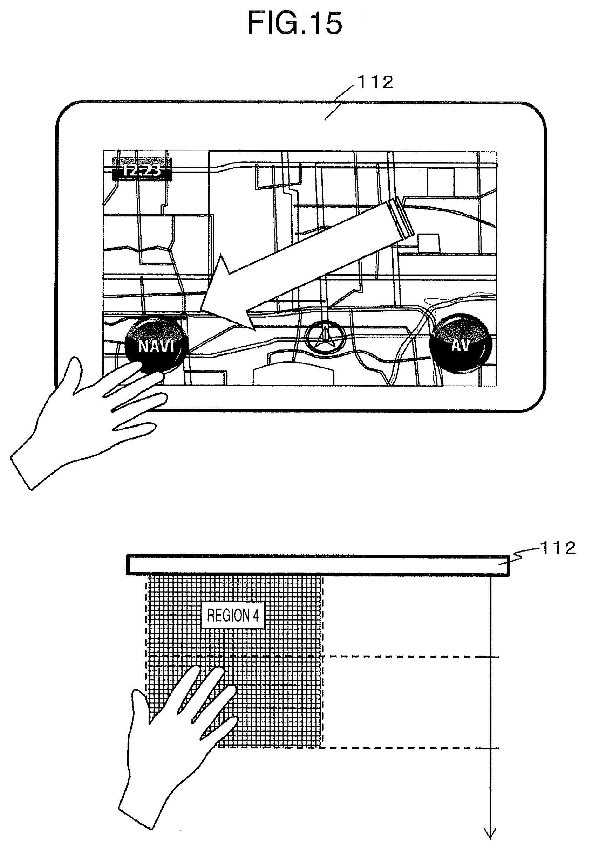

In this embodiment, the NAVI icon and the AV icon are displayed on the display unit 112. The sensing unit 103 monitors whether the user's hand from the assistant driver's seat is detected in region 4 (left-half region before the display unit 112 at the first distance from the sensing unit 103) such as the one shown in FIG. 14. If the sensing unit 103 detects the user's hand in region 4 (S1302: "Is hand detected in region 4?" Yes) as shown in FIG. 15, the vehicle-mounted device control unit 102 performs control to output a fourth sound effect or a voice from the speaker 113 (S1303: "Output sound effect from speaker"). The sound effect mentioned here refers to the sound "whiz" indicating that an object moves.

The vehicle-mounted device control unit 102 performs control to move the icon (NAVI icon in FIG. 15), displayed on the display unit 112, to the assistant driver's seat side (S1304: "Move predetermined icon to predetermined position"). After that, if the sensing unit 103 does not detect the user's hand in region 4 anymore (S1305: "Is user's hand present in region 4?" No), the vehicle-mounted device control unit 102 performs control to output a sound effect or a voice from the speaker 113 (S1306: "Output sound effect from speaker").

The sound effect is the sound "whiz" indicating that an object moves. The vehicle-mounted device control unit 102 performs control for the display unit 112 to return the icon, which has been moved to the assistant driver's seat side, to the initial display position (S1307: "Return icon to initial position").

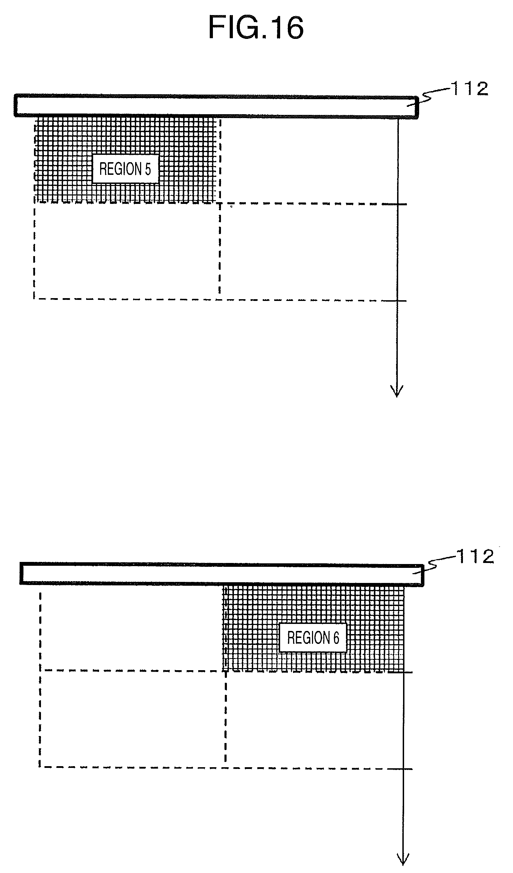

If the sensing unit 103 detects the user's hand in region 4 (S1305: "Is user's hand present in region 4?" Yes) and detects the user's hand also in region 5 (left-half region before the display unit 112 at the second distance from the sensing unit 103) in FIG. 16 (S1308: "Is user's hand present in region 5 or region 6?" region 5), the vehicle-mounted device control unit 102 performs control for the display unit 112 to display the lower-level menu of the NAVI icon in an expanded manner (S1309: "Expand menu of predetermined icon").

In this embodiment, "Destination", "Surrounding area search", "Position registration", and "Home", which are lower-level menus of the NAVI icon, are displayed. Similarly, if the sensing unit 103 detects the user's hand in region 6 (right-half region before the display unit 112 at the second distance from the sensing unit 103) in FIG. 16 (S1308: "Is user's hand present in region 5 or region 6?" region 6), the vehicle-mounted device control unit 102 performs control for the display unit 112 to display the lower-level menu of the AV icon (S1310).

In this embodiment, "FM/AM", "List", "Forward", and "Reverse", which are lower-level menus of the AV icon, are displayed.

When the processing in S1309 or S1310 is performed, the vehicle-mounted device control unit 102 performs control to output a sound effect or a voice, which is adjusted to the processing on the display unit 112, from the speaker 113 (S1311: "Output sound effect from speaker"). For example, the "splashing sound" that sounds like the splashing of an object is output.

After that, the menu is displayed (S1312: "Keep menu expanded"). If the sensing unit 103 detects that the user performs a gesture (for example, the user performs the bye-bye motion before the sensing unit 103) (S1313: "Is predetermined gesture detected?" Yes), the display of the displayed menu is stopped (S1314: "Close expanded menu") and the processing in S1306 and S1307 is performed. If a gesture is not detected (S1313: "Is predetermined gesture detected?" No) and a predetermined, for example, ten seconds, is elapsed after the menu is displayed, (S1315: "Is predetermined time elapsed?" Yes), the processing proceeds to S1314 and the display of the menu displayed in the expanded manner is stopped.

When a displayed menu is touched and the user input operation is accepted, the menu selected through the touch is displayed at the position, where the icon has been displayed, as an icon and the lower-level menu of the selected menu is displayed in a fan-like, expanded manner. For example, if "Destination" is selected through the touch, "Destination" is displayed at the position, where the NAVI icon has been displayed, as an icon and the lower-level menu of "Destination" is displayed in a fan-like, expanded manner. When the menu selection reaches the lowest layer and a desired item is selected (S1316: "Is user's input operation terminated?" Yes), the vehicle-mounted device control unit 102 performs control for the display unit 112 to set the icon to the highest level of the menu, returns the icon, which has been moved to the driver's side, to the initial display position (S1317: "Return icon to initial position"), and performs the processing in S1302.

After the lower-level menu of the icon is displayed, the processing in S1313, S1315, and S1316 is performed repeatedly. In the operation flow in FIG. 13, if the user's hand is detected in region 5 or region 6 and the menu remains displayed in the processing in S 1312 and, after that, if the hand is detected in another region, another configuration is also possible in which the menu corresponding to the region where the hand is newly detected is displayed (S1309 or S1310).

This configuration allows the user to switch the display of menus smoothly, making it easier to search for a desired menu. Although it is determined in S1313 whether a predetermined gesture is detected, another configuration is possible in which the voice recognition unit 108 determines whether a predetermined speech is detected. The word "cancel", "home", or "return" may be used as the predetermined speech. This configuration allows the user to stop displaying the menu and to return the icon to the initial display position without having to bring the hand before the sensing unit 103. It is also possible to stop displaying the menu, displayed in an expanded manner, and to return the icon to the initial display position by pressing a button such as a hard switch button or a steering controller button.

Operating the vehicle-mounted device based on the operation flow described above allows not only the driver but also a person in the assistant driver's seat to display a menu on the assistant driver's seat side simply by bringing the hand before the panel. In addition, when performing a desired operation, the lower level menu of a desired icon is displayed, not by touching the icon, but by simply bringing the hand near to the icon. Therefore, the effort or the number of times required for the touch operation can be reduced. In addition, when it is necessary to stop the display of a menu, the display can be released when a predetermined time elapses or when a gesture or a voice is recognized and, therefore, there is little or no distraction for the person in the assistant driver's seat.

Although the vehicle-mounted device is used in all embodiments, the present invention is not limited thereto. The present invention is applicable to a device, such as a personal computer or a digital signage, that has a display unit and input means.

Note that, the present invention is not limited to the above-described embodiments, but includes various modifications. For example, though the above embodiments have been described in detail in order to clearly describe the present invention, the present invention is not necessarily limited to the embodiments including all the described configurations. Moreover, it is possible to replace a part of the configuration of a certain embodiment with a configuration of another embodiment, and it is also possible to add a configuration of another embodiment to the configuration of a certain embodiment. For a part of the configuration of each embodiment, addition, deletion, or replacement of another configuration is possible.

The control lines and the information lines considered necessary for the explanation are included, but not all control lines and information lines of the product are necessarily included, in the above description. In fact, it is thought that almost all configurations are interconnected.

### REFERENCE SIGNS LIST

- 101: Vehicle-mounted device
- 102: Vehicle-mounted device control unit
- 103: Sensing unit
- 104: Distance detection unit
- 105: Position detection unit
- 106: Gesture detection unit
- 107: Microphone
- 108: Voice recognition unit
- 109: Switch input unit
- 110: Touch input unit
- 111: Traveling state input unit
- 112: Display unit
- 113: Speaker
- 114: Tactile IF unit

## Claims

1. An information processing device comprising:
a sensing unit that detects a distance to, and a position of, a user's hand;
a display unit that displays an image or a video; and
a device control unit that controls an operation of the device in its entirety wherein
when the user's hand is detected by said sensing unit in a predetermined region, said device control unit moves a display position of an icon displayed on said display unit.

2. The information processing device according to claim 1, wherein
when the user's hand is detected by said sensing unit in a region nearer to said display unit than the predetermined region, said device control unit displays a lower level menu of the icon.

3. The information processing device according to claim 2, wherein
said device control unit displays the menu for a predetermined time.

4. The information processing device according to claim 3, further comprising:
a gesture detection unit that detects a user's gesture, wherein
when said gesture detection unit detects a motion of the user while the menu is displayed, said device control unit stops the display of the menu and returns the icon to an initial display position.

5. The information processing device according to claim 3, further comprising:
a voice recognition unit that recognizes a user's speech, wherein
when said voice recognition unit recognizes a user's speech while the menu is displayed, said device control unit stops the display of the menu and returns the icon to an initial display position.

6. The information processing device according to claim 3, further comprising:
a switch unit that accepts a user's input, wherein
when said switch unit accepts a user's input while the menu is displayed, said device control unit stops the display of the menu and returns the icon to an initial display position.

7. The information processing device according to claim 1, further comprising:
a speaker unit, wherein
when said sensing unit detects the user's hand in the predetermined region, said device control unit outputs a predetermined voice from said speaker unit.

8. The information processing device according to claim 1, wherein
after moving the icon, said device control unit returns the icon to an initial display position after a predetermined time elapses.

9. The information processing device according to claim 1, further comprising:
a tactile interface unit, wherein
when said sensing unit detects the user's hand in the predetermined region, said device control unit presents predetermined tactile information to the user via said tactile interface unit.

10. The information processing device according to claim 2, further comprising:
a speaker unit or a tactile interface unit, wherein
said device control unit outputs voice or tactile information when the menu is displayed.

11. The information processing device according to claim 8, further comprising:
a speaker unit or a tactile interface unit, wherein
said device control unit outputs voice or tactile information when the icon is returned to an initial display position.

12. The information processing device according to claim 1, further comprising:
a traveling state input unit that receives a traveling state of a vehicle, wherein
said device control unit changes a display format of the predetermined menu according to the traveling state obtained from said traveling state receiving unit.
